# EUROPÄISCHE PATENTANMELDUNG

(11) **EP 4 588 767 A1**
(43) Veröffentlichungstag der Anmeldung: **23.07.2025**
(21) Anmeldenummer: 25151318.0
(22) Anmeldetag: 10.01.2025
(51) Int. Cl.: B62J 45/20, B62J 50/22, B62J 50/21, B62K 19/40

(54) **BENUTZERSCHNITTSTELLENANORDNUNG EINES ELEKTROFAHRRADS**

(30) Priorität: 22.01.2024 DE 102024200552
(71) Anmelder: Robert Bosch GmbH, 70442 Stuttgart (DE)
(72) Erfinder: Brumbach, Matthias, 70794 Filderstadt (DE); Kalyanasundaram, Balaji, 71101 Schoenaich (DE)

(57) **Zusammenfassung**

Die vorliegende Erfindung betrifft eine Benutzerschnittstellenanordnung eines Elektrofahrrads (100), umfassend einen Adapter (1), welcher eingerichtet ist zur passgenauen Montage in einer Rahmenöffnung (11) eines Fahrradrahmens (10) eines Elektrofahrrads (100), wobei der Adapter (1) eine Aufnahme (2) aufweist, die eingerichtet ist zur Halterung einer Benutzerschnittstelle (3) und/oder zur Halterung einer Smartphone-Halterung (35).

## Beschreibung

### Stand der Technik

Die vorliegende Erfindung betrifft eine Benutzerschnittstellenanordnung eines Elektrofahrrads, eine Rahmenanordnung eines Elektrofahrrads, und ein Elektrofahrrad.

Bekannt sind Elektrofahrräder mit Benutzerschnittstellen, welche eingerichtet sind zur Eingabe und Ausgabe von Informationen. Beispielsweise können derartige Benutzerschnittstellen Displays zur Anzeige von Informationen umfassen. Zudem können an den Benutzerschnittstellen Eingabeelemente vorgesehen sein, mittels welcher ein Benutzer Eingaben tätigen kann, wie beispielsweise eine Unterstützungsleistung einstellen kann. Häufig sind derartige Benutzerschnittstellen am Lenker des Elektrofahrrads angeordnet. Bekannt sind auch am Oberrohr des Fahrradrahmens angeordnete Benutzerschnittstellen. Zur platzsparenden Anordnung und aus Designgründen werden diese häufig in eine Öffnung des Fahrradrahmens integriert. Üblicherweise ist dabei die Geometrie der Öffnung im Fahrradrahmen und die Geometrie der Benutzerschnittstelle aufeinander abgestimmt.

### Offenbarung der Erfindung

Die erfindungsgemäße Benutzerschnittstellenanordnung mit den Merkmalen des Anspruchs 1 bietet demgegenüber den Vorteil einer besonders einfachen und kostengünstig herstellbaren Konstruktion, welche eine hohe Flexibilität der Verbindung von Fahrradrahmen und Benutzerschnittstellen ermöglicht. Insbesondere können dabei Benutzerschnittstellen mit verschiedenen Geometrien am Fahrradrahmen ohne spezielle Geometrieanpassung der Rahmenöffnung verwendet werden. Dies wird erfindungsgemäß erreicht durch eine Benutzerschnittstellenanordnung eines Elektrofahrrads, umfassend einen Adapter, welcher eingerichtet ist zur passgenauen Montage in oder auf einer Rahmenöffnung eines Fahrradrahmens des Elektrofahrrads. Dabei weist der Adapter eine Aufnahme auf, die eingerichtet ist zur Halterung einer Benutzerschnittstelle und/oder zur Halterung einer Smartphone-Halterung.

Als Rahmenöffnung kann insbesondere eine Durchgangsöffnung durch eine Wand oder einen Wandbereich eines rohrförmigen Teils des Fahrradrahmens, vorzugsweise eines Oberrohrs des Fahrradrahmens, angesehen werden.

Vorzugsweise ist der Adapter dabei eingerichtet, um derart an der Rahmenöffnung montiert zu werden, dass der Adapter im montierten Zustand durch die Rahmenöffnung hindurchragt.

Als passgenaue Montage wird insbesondere angesehen, dass im montierten Zustand eine Montagegeometrie des Adapters und eine Geometrie der Rahmenöffnung im Wesentlichen nahtlos aneinander angepasst sind. Mit anderen Worten fügt sich der Adapter passgenau, insbesondere ohne signifikante Freiräume, in die Rahmenöffnung im montierten Zustand ein und kann dabei auch den Rand der Rahmenöffnung überdecken. Dadurch kann eine besonders zuverlässige, robuste und designoptimierte Befestigung ermöglicht werden. Zudem kann beispielsweise der Adapter eine Abdichtung des Fahrradrahmens gegenüber Fluideintritt bereitstellen.

Als Aufnahme wird insbesondere eine mechanische Schnittstelle angesehen, an oder in der die Benutzerschnittstelle und/oder die Smartphone-Halterung befestigt werden kann. Beispielsweise kann die Aufnahme eine Öffnung und/oder Vertiefung aufweisen, innerhalb der die Benutzerschnittstelle und/oder die Smartphone-Halterung zur Befestigung zumindest teilweise angeordnet sein kann. Beispielsweise kann die Aufnahme ein Fixierelement umfassen, mittels welchem die Benutzerschnittstelle und/oder die Smartphone-Halterung an dem Adapter fixierbar ist.

Als Benutzerschnittstelle wird insbesondere eine Ein- und/oder Ausgabeeinheit angesehen. Mittels der Benutzerschnittstelle kann ein Nutzer des Elektrofahrrads vorzugsweise Eingaben tätigen, wie beispielsweise zur Steuerung des Elektrofahrrads. Beispielsweise kann eine Unterstützungsstufe des Motors über Tasten und/oder einen Bildschirm bedient werden. Alternativ oder zusätzlich kann die Benutzerschnittstelle Informationen an den Nutzer ausgeben, wie beispielsweise Informationen über eine Unterstützungsstufe, einen Akkustand, weitere Systeminformationen, oder Fahrinformationen, wie Geschwindigkeit, Strecke, Fahrzeit, Reichweite, Uhrzeit usw.. Beispielsweise kann die Benutzerschnittstelle zur Ausgabe von visuellen Informationen zumindest einen Bildschirm und/oder zumindest eine LED aufweisen. Zusätzlich kann die Benutzerschnittstelle auch eingerichtet sein, um akustische Informationen auszugeben.

Als Smartphone-Halterung wird insbesondere eine Vorrichtung angesehen, die eingerichtet ist zur lösbaren mechanischen Befestigung eines Smartphones. Bevorzugt kann die Smartphone-Halterung zumindest zwei Halteelemente aufweisen, zwischen denen ein Smartphone eingeklemmt werden kann, um das Smartphone zu halten.

Bevorzugt kann die Smartphone-Halterung eingerichtet sein um ein daran befestigtes Smartphone kabellos zu laden, beispielsweise mittels Induktion. Alternativ oder zusätzlich bevorzugt kann die Smartphone-Halterung ein Bluetooth-Modul und/oder ein Navigations-Module umfassen, das eingerichtet ist zur Kommunikation mit einem befestigbaren Smartphone.

Mit anderen Worten wird eine Benutzerschnittstellenanordnung bereitgestellt, welche einen Adapter aufweist, der zur Montage zwischen Benutzerschnittstelle und Fahrradrahmen des Elektrofahrrads vorgesehen ist. Dadurch bietet sich der Vorteil einer besonders einfachen und flexiblen Montage verschiedener Benutzerschnittstellen an verschiedenen Fahrzeugrahmen. Vorteilhafterweise können dabei Standardgeometrien für die Rahmenöffnungen verwendet werden, wobei unterschiedlichste Benutzerschnittstellen durch den Adapter verwendet werden können. Beispielsweise ist für verschieden große Benutzerschnittstellen lediglich eine Anpassung oder Verwendung eines entsprechenden Adapters erforderlich. Ein derartiger Adapter kann dabei besonders einfach und kostengünstig hergestellt werden, beispielsweise als einfaches Kunststoff-Bauteil. Somit ist zur Integration der Benutzerschnittstelle in den Fahrradrahmen insbesondere keine Modifikation der Rahmenöffnung oder der Benutzerschnittstelle erforderlich. Dadurch kann beispielsweise auch ein Austausch von unterschiedlichen Modellen an Benutzerschnittstellen auf einfache und kostengünstige Weise ermöglicht werden.

Die Unteransprüche zeigen bevorzugte Weiterbildungen der Erfindung.

Bevorzugt ist die Aufnahme eingerichtet und/oder anpassbar zur Halterung von Benutzerschnittstellen mit unterschiedlichen Geometrien. Insbesondere ist die Aufnahme eingerichtet und/oder anpassbar zur Halterung von verschiedenen großen Benutzerschnittstellen. Beispielsweise kann die Aufnahme dabei derart geometrisch ausgebildet sein, um durch entsprechende Halterungsgeometrien verschiedene Benutzerschnittstellen halten zu können. Alternativ oder zusätzlich kann die Benutzerschnittstelle derart ausgebildet sein, dass mit besonders einfachen und kostengünstigen Mitteln die Halterungsgeometrien an verschiedene Benutzerschnittstellen anpassbar ist, beispielsweise durch umformende Verfahren. Damit kann durch Anpassung eines vergleichbar einfach herzustellenden und/oder anpassbaren Bauteils eine flexible Verwendung verschiedene Benutzerschnittstellen an demselben Fahrradrahmen ermöglicht werden.

Vorzugsweise ist der Adapter aus Kunststoff, besonders bevorzugt zumindest teilweise aus einem Elastomer gebildet. Dadurch kann neben einer besonders einfachen und kostengünstigen Herstellbarkeit mit flexibler Geometrie eine optimale mechanische Verbindung zwischen Benutzerschnittstelle und Rahmen bereitgestellt werden. Beispielsweise kann der Adapter dadurch eine gewisse Dämpfungswirkung von Vibrationen bieten. Zudem können ein Toleranzausgleich und eine Abdichtung zuverlässig und auf einfache Weise bereitgestellt werden. Gleichzeitig kann die Oberfläche aber auch durch Lackierung, Folierung, etc. an spezifische Bedürfnisse oder die Fahrradrahmenoberfläche angepasst werden. Bei höherwertigen Einsatzmöglichkeiten könnte auch ein höherwertiges Material oder eine Zwei-Komponenten-Konstruktion zum Einsatz kommen.

Bevorzugt ist der Adapter ein Spritzgießbauteil, das heißt insbesondere mittels Spritzgießen hergestellt, um eine besonders kostengünstige Variante zu ermöglichen. Damit können flexible Geometrien des Adapters auf einfache und kostengünstige Weise hergestellt werden.

Weiter bevorzugt weist der Adapter und /oder die Benutzerschnittstelle mindestens einen Abstützarm auf. Der Abstützarm ist eingerichtet zur Abstützung am Fahrradrahmen, insbesondere in einem Bereich neben der Rahmenöffnung. Das heißt, der Abstützarm erstreckt sich insbesondere in radialer Richtung bezüglich der Rahmenöffnung bis zu einem Wandbereich des Fahrradrahmens neben der Rahmenöffnung und liegt an dieser an. Vorzugsweise ist der Abstützarm zumindest teilweise elastisch ausgebildet, insbesondere derart, dass dieser eine Federkraft auf die Wand ausübt. Bei einer Montage des Adapters an einem rohrförmigen Bereich eines Fahrradrahmens ist im montierten Zustand der Abstützarm bevorzugt innerhalb des rohrförmigen Bereichs angeordnet. Das heißt der Abstützarm stützt gegen eine Innenseite des Fahrradrahmens ab. Durch den Abstützarm kann eine besonders zuverlässige und robuste Befestigung des Adapters und /oder der Benutzerschnittstelle am Fahrradrahmen ermöglicht werden. Insbesondere bei einer gewissen Nachgiebigkeit des Abstützarms kann zudem auf einfache Weise ein Ausgleich von Toleranzen und/oder verschiedenen Wandstärken des Fahrradrahmens ermöglicht werden.

Bevorzugt weist der Adapter ein Pufferelement auf, das am Abstützarm angeordnet ist. Insbesondere ist das Pufferelement derart angeordnet, dass dieses im montierten Zustand am Bereich des Fahrradrahmens, an dem der Abstützarm sich abstützt, anliegt. Das Pufferelement ist bevorzugt aus einem elastischen Material, wie beispielsweise Gummi, ausgebildet. Dadurch kann auf einfache Weise ein gewisser Toleranzausgleich und eine Verminderung einer Vibrationsübertragung bereitgestellt werden.

Bevorzugt weist der Adapter einen Adapterrahmen auf, der die Aufnahme vollständig umschließt. Insbesondere ist der Adapterrahmen eingerichtet für einen Kontakt mit einem gesamten Innenrand der Rahmenöffnung. Das heißt, der Adapterrahmen ist beispielsweise ringförmig ausgebildet und umschließt die Benutzerschnittstelle vollständig und steht vorzugsweise vollständig in Kontakt mit dem Innenrand der Rahmenöffnung. Dadurch kann auf einfache und kostengünstige Weise eine besonders einfache und zuverlässige Montage der Benutzerschnittstelle im Fahrradrahmen ermöglicht werden.

Weiter bevorzugt umfasst die Benutzerschnittstellenanordnung ferner eine Benutzerschnittstelle. Insbesondere ist die Benutzerschnittstelle eine Ein- und/oder Ausgabeeinheit. Bevorzugt umfasst die Benutzerschnittstelle ein Display und/oder ein oder mehrere Eingabeelemente, wie beispielsweise Tasten.

Bevorzugt umfasst die Benutzerschnittstellenanordnung ferner eine Ladeschnittstelle, welche eingerichtet ist zur Verbindung mit einer Ladevorrichtung. Die Ladeschnittstelle ist dabei mit dem Adapter verbindbar ausgebildet. Alternativ bevorzugt kann die Ladeschnittstelle integraler Bestandteil des Adapters sein. Insbesondere kann somit über die Ladeschnittstelle ein Laden, beispielsweise eines elektrischen Energiespeichers des Elektrofahrrads erfolgen.

Weiter bevorzugt umfasst die Benutzerschnittstellenanordnung ferner eine Gerätehalterung, welche eingerichtet ist zur Halterung eines Nutzergeräts, und welche mit dem Adapter verbindbar ausgebildet ist. Alternativ bevorzugt kann die Gerätehalterung integraler Bestandteil des Adapters sein. Als Nutzergerät kann insbesondere ein mobiles Nutzergerät eines Nutzers des Elektrofahrrads angesehen werden, wie beispielsweise ein Smartphone. Bevorzugt ist die Gerätehalterung dabei eingerichtet zur mechanischen und/oder elektrischen Verbindung mit dem Nutzergerät. Dadurch kann eine zusätzliche einfach und flexibel bereitstellbare Funktion der Benutzerschnittstellenanordnung ermöglicht werden, welche einen hohen Nutzerkomfort bietet.

Vorzugsweise umfasst die Benutzerschnittstellenanordnung ferner eine elektrische Schnittstelle zur elektrischen Verbindung mit der Benutzerschnittstelle. Die elektrische Schnittstelle kann beispielsweise zusätzlich zum Adapter vorgesehen sein, oder alternativ bevorzugt integraler Bestandteil des Adapters sein. Insbesondere kann die elektrische Schnittstelle eingerichtet sein zur Stromversorgung der Benutzerschnittstelle und/oder zur Signalübertragung zwischen der Benutzerschnittstelle und weiteren Komponenten des Elektrofahrrads.

Weiterhin führt die Erfindung zu einer Rahmenanordnung eines Elektrofahrrads, umfassend die beschriebene Benutzerschnittstellenanordnung, und einen Fahrradrahmen. Die Benutzerschnittstellenanordnung ist dabei in einer Rahmenöffnung des Fahrradrahmens angeordnet, insbesondere befestigt.

Bevorzugt ist die Rahmenöffnung als eine Durchgangsöffnung durch eine Wand eines Oberrohrrohrs des Fahrradrahmens ausgebildet. Das heißt, die Rahmenöffnung durchdringt die Wand des Oberrohrs in radialer Richtung.

Ferner betrifft die Erfindung ein Elektrofahrrad, welches die beschriebene Benutzerschnittstellenanordnung und/oder die beschriebene Rahmenanordnung umfasst.

Weiterhin führt die Erfindung zu einem System, umfassend ein erstes Elektrofahrrad und ein zweites Elektrofahrrad. Das erste Elektrofahrrad umfasst eine oben beschriebene Benutzerschnittstellenanordnung und eine erste Benutzerschnittstelle, welche über die Benutzerschnittstellenanordnung zumindest teilweise in einer Rahmenöffnung eines ersten Fahrradrahmens des ersten Elektrofahrrads aufgenommen ist. Das zweite Elektrofahrrad umfasst eine zweite Benutzerschnittstelle ohne die Benutzerschnittstellenanordnung. Dabei ist die zweite Benutzerschnittstelle direkt in einer zweiten Rahmenöffnung eines zweiten Fahrradrahmens des zweiten Elektrofahrrads aufgenommen. Die erste Rahmenöffnung des ersten Elektrofahrrads und die zweite Rahmenöffnung des zweiten Elektrofahrrads sind dabei, insbesondere im Wesentlichen, identisch ausgebildet. Vorzugsweise können die beiden Rahmenöffnungen der beiden Elektrofahrräder geometrisch genau identisch ausgebildet sein.

Ferner führt die Erfindung zu einem System, umfassend ein erstes Elektrofahrrad und ein drittes Elektrofahrrad. Das erste Elektrofahrrad umfasst eine oben beschriebene Benutzerschnittstellenanordnung und eine erste Benutzerschnittstelle, welche über die Benutzerschnittstellenanordnung zumindest teilweise in einer Rahmenöffnung eines ersten Fahrradrahmens des ersten Elektrofahrrads aufgenommen ist. Das dritte Elektrofahrrad umfasst ebenfalls eine beschriebene Benutzerschnittstellenanordnung und eine dritte Benutzerschnittstelle, die insbesondere mittels der Benutzerschnittstellenanordnung in einer Rahmenöffnung eines dritten Fahrradrahmens des dritten Elektrofahrrads aufgenommen ist.

### Kurze Beschreibung der Zeichnungen

Nachfolgend wird ein Ausführungsbeispiel der Erfindung unter Bezugnahme auf die begleitenden Zeichnungen im Detail beschrieben. In der Zeichnung ist:
- Figur 1: eine vereinfachte schematische Ansicht eines Elektrofahrrads mit einer Benutzerschnittstellenanordnung gemäß einem ersten Ausführungsbeispiel der Erfindung,
- Figur 2: eine perspektivische Ansicht der Benutzerschnittstellenanordnung der Figur 1,
- Figur 3: eine perspektivische Ansicht eines Adapters der Benutzerschnittstellenanordnung der Figur 1,
- Figur 4: eine Detail-Schnittansicht der Benutzerschnittstellenanordnung der Figur 1,
- Figur 5: eine perspektivische Ansicht einer Benutzerschnittstellenanordnung gemäß einem zweiten Ausführungsbeispiel der Erfindung,
- Figur 6: eine Detailansicht der Benutzerschnittstellenanordnung der Figur 5,
- Figur 7: eine perspektivische Ansicht einer Benutzerschnittstellenanordnung gemäß einem dritten Ausführungsbeispiel der Erfindung,
- Figur 8: eine perspektivische Ansicht einer Benutzerschnittstellenanordnung gemäß einem dritten Ausführungsbeispiel der Erfindung, und
- Figur 9: eine weitere perspektivische Ansicht der Benutzerschnittstellenanordnung der Figur 8.

### Ausführungsformen der Erfindung

Bevorzugt sind alle gleichen Bauteile, Elemente und/oder Einheiten in allen Figuren mit den gleichen Bezugszeichen versehen.

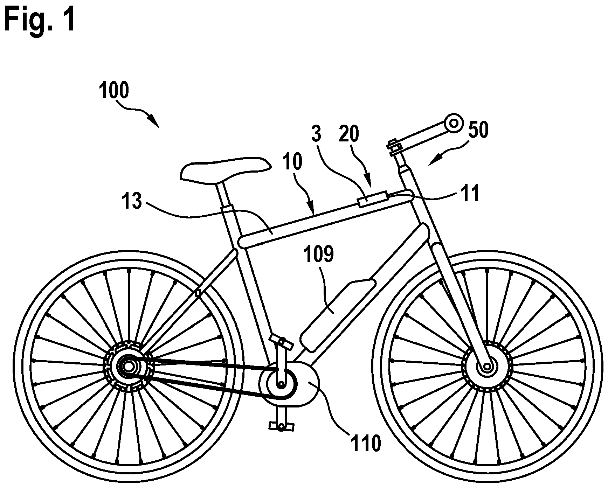

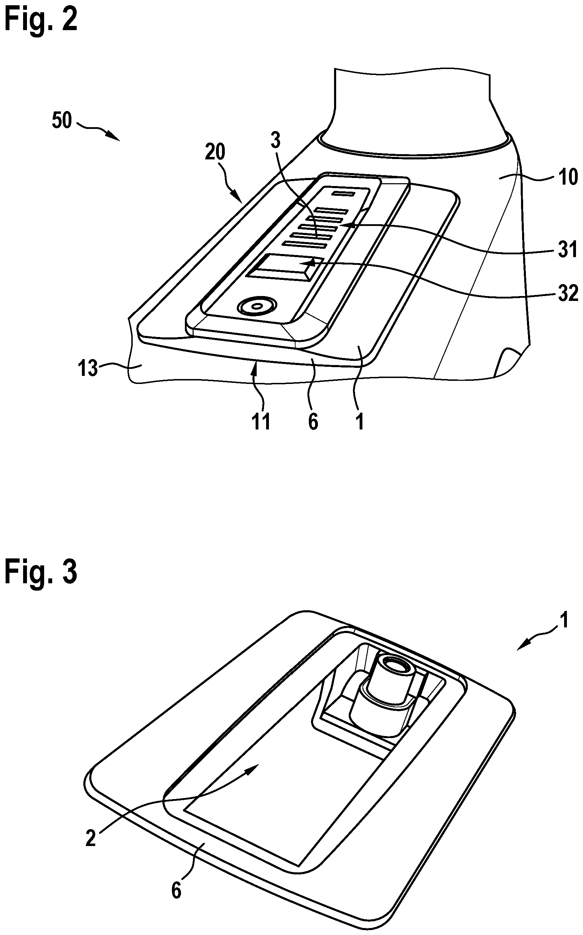

Figur 1 zeigt eine vereinfachte schematische Ansicht eines Elektrofahrrads 100 mit einer Benutzerschnittstellenanordnung 20 gemäß einem ersten Ausführungsbeispiel der Erfindung. Die Figuren 2 bis 4 zeigen Details der Benutzerschnittstellenanordnung 20 des ersten Ausführungsbeispiels.

Das Elektrofahrrad 100 umfasst eine Antriebseinheit 110, die einen Motor umfasst, der insbesondere ein Elektromotor ist. Der Motor kann mittels eines beliebig angeordneten elektrischen Energiespeichers 109 des Elektrofahrrads 100 mit elektrischer Energie versorgt werden.

Die Antriebseinheit 110 kann im Bereich eines Tretlagers des Elektrofahrrads 100 angeordnet sein. Durch ein mittels des Motors erzeugten Motormoments kann eine durch Muskelkraft erzeugte Tretkraft eines Fahrers des Elektrofahrrads 100 motorisch unterstützt werden. Die Muskelkraft des Fahrers kann dabei über einen Kurbeltrieb aufgebracht werden.

Das Elektrofahrrad 100 umfasst ferner eine Steuereinheit, welche eingerichtet ist, um die Antriebseinheit 110 gesteuert zu betätigen. Die Steuereinheit kann beispielsweise in eine Benutzerschnittstelle 3 integriert sein, welche nachfolgend näher beschrieben wird.

Die Benutzerschnittstellenanordnung 20 ist Teil einer Rahmenanordnung 50, welche zusätzlich zur Benutzerschnittstellenanordnung 20 einen Fahrradrahmen 10 des Elektrofahrrads 100 umfasst.

Die Benutzerschnittstellenanordnung 20 ist an einem Oberrohr 13 des Fahrradrahmens 10 des Elektrofahrrads 100 angeordnet, im Detail in eine Rahmenöffnung 11 des Fahrradrahmens 10 integriert.

Die Benutzerschnittstellenanordnung 20 umfasst dabei die Benutzerschnittstelle 3, welche als Ein- und Ausgabeeinheit ausgebildet ist, die ein Ausgabeelement 31 und ein Eingabeelement 32 (vergleiche Figur 2) umfasst. Das Ausgabeelement 31 ist insbesondere als LED-Anzeige ausgebildet. Das Eingabeelement 32 ist insbesondere als Taste ausgebildet. Bevorzugt kann die Benutzerschnittstelle 3 in einer alternativen (nicht dargestellten) Ausführungsform ein Display zur Anzeige von Informationen aufweisen.

Zudem umfasst die Benutzerschnittstellenanordnung 20 einen Adapter 1. Der Adapter 1 ist in perspektivischer Ansicht in der Figur 3 dargestellt. Der Adapter 1 ist dabei vorgesehen, um eine indirekte Montage der Benutzerschnittstelle 3 in der Rahmenöffnung 11 des Fahrradrahmens 10 bereitzustellen.

Der Adapter 1 weist eine Aufnahme 2 auf, die eingerichtet ist zur Halterung der Benutzerschnittstelle 3. Der Adapter 1 ist dabei wie in der Figur 3 zu erkennen, rahmenförmig ausgebildet und weist einen Adapterrahmen 6 auf, der die Aufnahme 2, welche insbesondere als Durchgangsöffnung ausgebildet ist, vollständig umschließt.

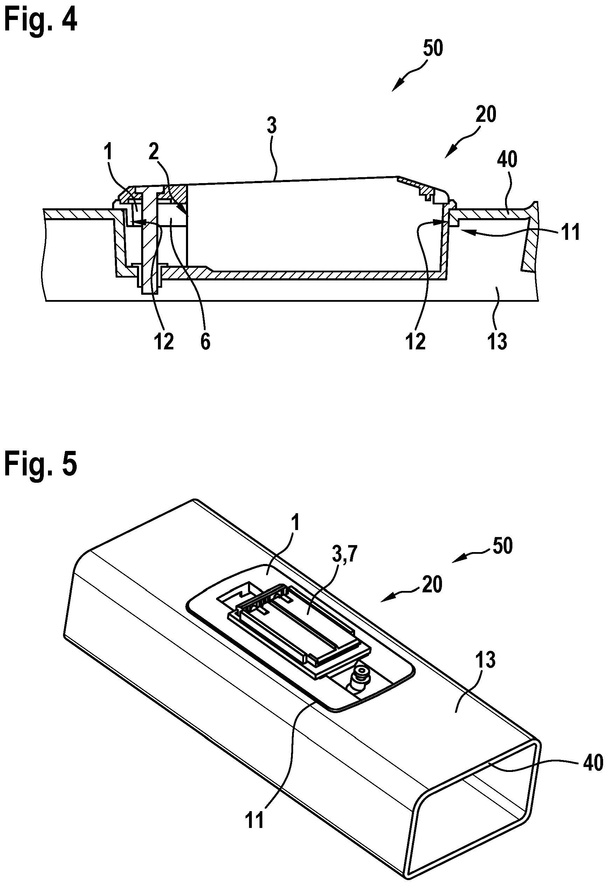

Der Adapter 1 ist dabei eingerichtet zur passgenauen Montage in der Rahmenöffnung 11. Im Detail kann der Adapter 1 derart in der Rahmenöffnung 11 angeordnet werden, dass dieser mit einem gesamten Innenrand 12 der Rahmenöffnung 11 in Kontakt steht (vergleiche Figur 4).

Im montierten Zustand ragen somit Adapter 1 und Benutzerschnittstelle 3 durch die Rahmenöffnung 11, welche als Durchgangsöffnung durch eine obere Wand 40 des Oberrohrs 13 des Fahrradrahmens 10 ausgebildet ist, hindurch (vergleiche Figur 4).

Der Adapter 1 bietet dabei den Vorteil, dass auf besonders einfache und kostengünstige Weise verschiedene Benutzerschnittstellen 3 ohne Geometrieanpassung des Fahrradrahmens 10 an diesem montiert werden können. Das heißt, es kann beispielsweise genau eine vordefinierte Geometrie der Rahmenöffnung 11 für eine Vielzahl an Benutzerschnittstellen 3 verwendet werden, wobei der Adapter 1 als einfach und kostengünstig mit verschiedenen Geometrien herstellbares Bauteil eine zuverlässige und passgenaue Montage von Benutzerschnittstellen 3 unterschiedlicher Größen erlaubt.

Der Adapter 1 kann dabei als Spritzgießbauteil aus einem Kunststoff ausgebildet sein, um eine einfache und kostengünstige Herstellung zu ermöglichen. Zudem bietet der Adapter 1 dadurch auf einfache Weise eine Abdichtung an der Rahmenöffnung 11, insbesondere gegenüber Fluideintritt, und eine Dämpfung einer Vibrationsübertragung zwischen Fahrradrahmens 11 und Benutzerschnittstelle 3.

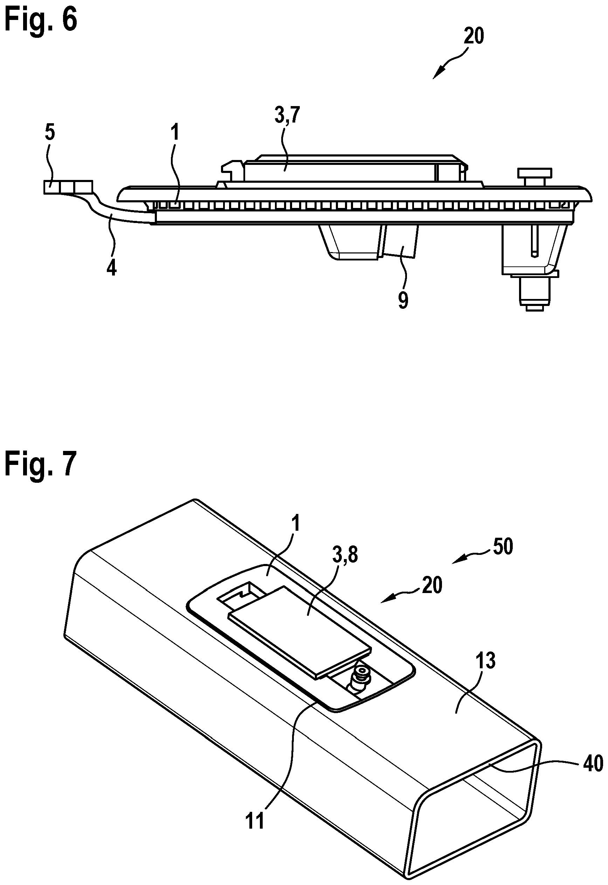

Figur 5 zeigt eine perspektivische Ansicht einer Rahmenanordnung 50 mit einer Benutzerschnittstellenanordnung 20 gemäß einem zweiten Ausführungsbeispiel der Erfindung. In Figur 6 ist eine seitliche Detailansicht der Benutzerschnittstellenanordnung 20 der Figur 5 dargestellt. Das zweite Ausführungsbeispiel entspricht im Wesentlichen dem ersten Ausführungsbeispiel der Figur 1, mit dem Unterschied einer alternativen Ausgestaltung des Adapters 1 und der Benutzerschnittstelle 3.

Im zweiten Ausführungsbeispiel umfasst der Adapter 1 zusätzlich einen Abstützarm 4, der eingerichtet ist zur Abstützung am Fahrradrahmen 10. Der Abstützarm 4 ist derart angeordnet und ausgebildet, dass dieser sich im montierten Zustand des Adapters 1 im Inneren des Oberrohrs 13 befindet, wobei ein entferntes Ende des Abstützarms 4 sich mittels einer elastischen Federkraft an einer Innenseite der Wand 40 des Oberrohrs 13 abstützt. Dadurch kann eine besonders robuste und zuverlässige Befestigung des Adapters 10 in der Rahmenöffnung 11 erfolgen. Beispielsweise kann dabei auf einfache Weise ein Toleranzausgleich und/oder ein Ausgleich unterschiedlich dicker Wände 40 verschiedener Oberrohre 13 erfolgen.

Der Adapter 1 weist dabei im zweiten Ausführungsbeispiel zudem ein Pufferelement 5 auf, welches am entfernt liegenden Ende des Abstützarms 4 angeordnet ist. Das Pufferelement 5 ist dabei aus einem elastisch nachgiebigen Material gebildet, Beispielsweise aus Gummi. Dadurch kann auf besonders einfache Weise eine Dämpfung von Vibrationen erfolgen, um beispielsweise eine klapperfreie Befestigung des Adapters 1 zu ermöglichen.

Zudem ist im zweiten Ausführungsbeispiel eine alternative Benutzerschnittstelle 3 vorgesehen, welche zusätzlich oder alternativ zur Ein- und Ausgabeeinheit eine Ladeschnittstelle 7 aufweist. Die Ladeschnittstelle 7 ist eingerichtet zur Verbindung mit einer (nicht dargestellten) Ladevorrichtung. Die Ladevorrichtung ist insbesondere eingerichtet, um einen elektrischen Ladestrom bereitzustellen, um den Energiespeicher 109 des Elektrofahrrads 100 zu laden. Das heißt, an der Ladeschnittstelle 7 kann ein Anstecken der Ladevorrichtung erfolgen. Damit kann eine besonders einfache und benutzerfreundliche Bedienung der Benutzerschnittstellenanordnung 20 ermöglicht werden.

Die Benutzerschnittstellenanordnung 20 umfasst vorzugsweise zusätzlich eine elektrische Schnittstelle 9, welche mit der Ladeschnittstelle 7 elektrisch verbunden ist. Die elektrische Schnittstelle 9 befindet sich dabei im montierten Zustand im Inneren des Oberrohrs 13 (vergleiche Figur 6). Beispielsweise kann dadurch eine Verkabelung im Inneren des Fahrradrahmens 10 erfolgen.

Vorzugsweise ist die elektrische Schnittstelle 9 zusätzlich eingerichtet zur elektrischen Signalübertragung, beispielsweise um Eingabe- und/oder Ausgabesignale übertragen zu können.

Figur 7 zeigt eine perspektivische Ansicht einer Rahmenanordnung 50 mit einer Benutzerschnittstellenanordnung 20 gemäß einem dritten Ausführungsbeispiel der Erfindung. Das dritte Ausführungsbeispiel entspricht im Wesentlichen dem ersten Ausführungsbeispiel der Figur 1, mit dem Unterschied einer weiteren alternativen Ausgestaltung der Benutzerschnittstelle 3. Im dritten Ausführungsbeispiel weist die Benutzerschnittstelle 3 zusätzlich oder alternativ zur Ein- und Ausgabeeinheit eine Gerätehalterung 8 auf. Die Gerätealterung 8 ist eingerichtet zur Halterung eines Nutzergeräts, wie beispielsweise eines Smartphones. Die Gerätehalterung 8 kann dabei eingerichtet sein zur mechanischen und/oder elektrischen Verbindung mit dem Nutzergerät. Dadurch kann eine weitere Funktion für eine hohe Flexibilität und einen hohen Nutzerkomfort der Benutzerschnittstellenanordnung 20 bereitgestellt werden.

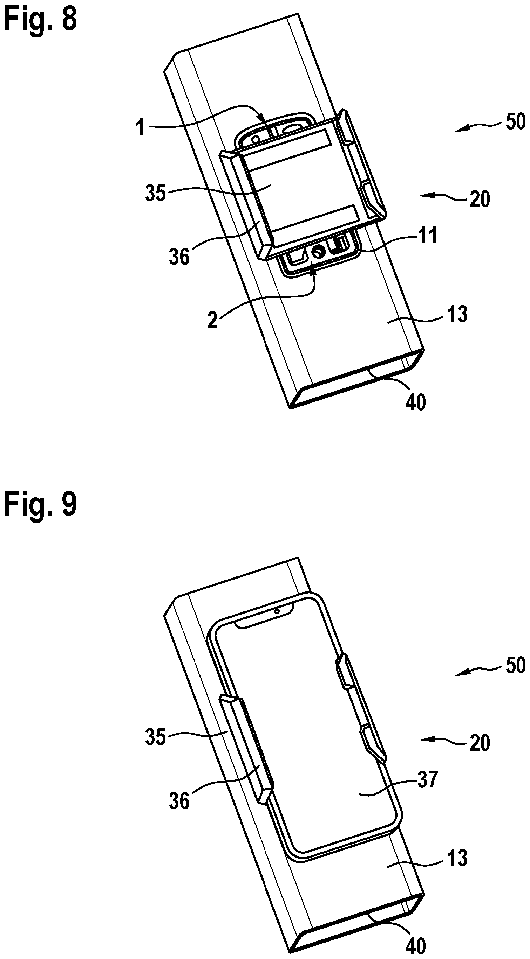

Figur 8 zeigt eine perspektivische Ansicht einer Rahmenanordnung 50 mit einer Benutzerschnittstellenanordnung 20 gemäß einem vierten Ausführungsbeispiel der Erfindung. Das vierte Ausführungsbeispiel entspricht im Wesentlichen dem ersten Ausführungsbeispiel der Figur 1, mit dem Unterschied einer weiteren alternativen Ausgestaltung des Adapters 1.im vierten Ausführungsbeispiel der Figur 8 weist der Adapter 1 eine Aufnahme 2 auf, die eingerichtet ist zur Halterung einer Smartphone-Halterung 35. Die Smartphone-Halterung 35 ist dabei eingerichtet zur Halterung eines Smartphones 37, wie in Figur 9 dargestellt. Figur 9 zeigt dabei die Rahmenanordnung 50 der Figur 8 mit einem in der Smartphone-Halterung 35 befestigten Smartphone 37. Die Smartphone-Halterung 35 weist dabei zwei gegenüberliegende Halteelemente 36 auf, zwischen denen das Smartphone 37 eingeklemmt werden kann, zu mechanischen Befestigung an der Smartphone-Halterung 35. Vorzugsweise werden die Halteelemente 36 mittels einer Federeinrichtung mit einer Federkraft aufeinander zugezogen, um eine Klemmkraft auf das Smartphone 37 ausüben zu können, für eine stabile Befestigung.

## Patentansprüche

1. Benutzerschnittstellenanordnung eines Elektrofahrrads (100), umfassend einen Adapter (1), welcher eingerichtet ist zur passgenauen Montage in einer Rahmenöffnung (11) eines Fahrradrahmens (10) eines Elektrofahrrads (100), wobei der Adapter (1) eine Aufnahme (2) aufweist, die eingerichtet ist zur Halterung einer Benutzerschnittstelle (3) und/oder zur Halterung einer Smartphone-Halterung (35).

2. Benutzerschnittstellenanordnung nach Anspruch 1, wobei die Aufnahme (2) eingerichtet und/oder anpassbar ist zur Halterung von Benutzerschnittstellen (3) mit unterschiedlicher Geometrie.

3. Benutzerschnittstellenanordnung nach einem der vorhergehenden Ansprüche, wobei der Adapter (1) aus Kunststoff, insbesondere zumindest teilweise aus einem Elastomer, gebildet ist, vorzugsweise wobei der Adapter (1) ein Spritzgießbauteil ist.

4. Benutzerschnittstellenanordnung nach einem der vorhergehenden Ansprüche, wobei der Adapter (1) und/oder die Benutzerschnittstelle (3) mindestens einen Abstützarm (4) aufweist, der eingerichtet ist zur Abstützung am Fahrradrahmen (10).

5. Benutzerschnittstellenanordnung nach Anspruch 4, wobei der Adapter (1) ein Pufferelement (5) aufweist, das am Abstützarm (4) angeordnet ist.

6. Benutzerschnittstellenanordnung nach einem der vorhergehenden Ansprüche, wobei der Adapter (1) einen Adapterrahmen (6) aufweist, der die Aufnahme (2) vollständig umschließt, und der insbesondere eingerichtet ist für einen Kontakt mit einem gesamten Innenrand (12) der Rahmenöffnung (11).

7. Benutzerschnittstellenanordnung nach einem der vorhergehenden Ansprüche, ferner umfassend eine Benutzerschnittstelle (3).

8. Benutzerschnittstellenanordnung nach einem der vorhergehenden Ansprüche, ferner umfassend eine Ladeschnittstelle (7), welche eingerichtet ist zur Verbindung mit einer Ladevorrichtung, und welche mit dem Adapter (1) verbindbar ausgebildet ist.

9. Benutzerschnittstellenanordnung nach einem der vorhergehenden Ansprüche, ferner umfassend eine Gerätehalterung (8), welche eingerichtet ist zur Halterung eines Nutzergeräts, und welche mit dem Adapter (1) verbindbar ausgebildet ist.

10. Benutzerschnittstellenanordnung nach einem der vorhergehenden Ansprüche, ferner umfassend eine elektrische Schnittstelle (9) zur elektrischen Verbindung mit der Benutzerschnittstelle (3).

11. Rahmenanordnung, umfassend:
- eine Benutzerschnittstellenanordnung (20) nach einem der vorhergehenden Ansprüche, und
- einen Fahrradrahmen (10),
- wobei die Benutzerschnittstellenanordnung (20) in einer Rahmenöffnung (11) des Fahrradrahmens (10) angeordnet ist.

12. Rahmenanordnung nach Anspruch 11, wobei die Rahmenöffnung (11) eine Durchgangsöffnung durch eine Wand (40) eines Oberrohres (13) des Fahrradrahmens (10) ist.

13. Elektrofahrrad, umfassend eine Benutzerschnittstellenanordnung (20) nach einem der Ansprüche 1 bis 10 oder eine Rahmenanordnung (50) nach einem der Ansprüche 11 oder 12.

14. System, umfassend ein erstes Elektrofahrrad (100) mit einer Benutzerschnittstellenanordnung (20) gemäß einem der Ansprüche 1 bis 10 und mit einer ersten Benutzerschnittstelle (3), die über die Benutzerschnittstellenanordnung (20) zumindest teilweise in einer Rahmenöffnung (11) eines ersten Fahrradrahmens (10) des ersten Elektrofahrrads (100) aufgenommen ist, und ein zweites Elektrofahrrad (100) mit einer zweiten Benutzerschnittstelle (3) ohne die Benutzerschnittstellenanordnung (20), wobei die zweite Benutzerschnittstelle (3) direkt in einer zweiten Rahmenöffnung (11) eines zweiten Fahrradrahmens (10) des zweiten Elektrofahrrads (100) aufgenommen ist, **dadurch gekennzeichnet, dass** die erste Rahmenöffnung (11) und die zweite Rahmenöffnung (11) im Wesentlichen identisch ausgebildet sind.

15. System, umfassend ein erstes Elektrofahrrad (100) mit einer Benutzerschnittstellenanordnung (20) gemäß einem der Ansprüche 1 bis 10 und mit einer ersten Benutzerschnittstelle (3), die über die Benutzerschnittstellenanordnung (20) zumindest teilweise in einer ersten Rahmenöffnung (11) eines Fahrradrahmens (10) des ersten Elektrofahrrads (100) aufgenommen ist, und ein drittes Elektrofahrrad (100) mit der ersten Benutzerschnittstellenanordnung (20) und mit einer dritten Benutzerschnittstelle (3).
